# EUROPÄISCHE PATENTANMELDUNG

(11) **EP 1 632 878 A1**
(43) Veröffentlichungstag der Anmeldung: **08.03.2006**
(21) Anmeldenummer: 05107370.8
(22) Anmeldetag: 11.08.2005
(51) Int. Cl.: G06F 21/00, G09G 3/00

(54) **Haushaltgerät mit einer Anzeigeeinrichtung mit einem Bildschirmschoner**

(30) Priorität: 02.09.2004 DE 102004042565
(71) Anmelder: BSH Bosch und Siemens Hausgeräte GmbH, 81739 München (DE)
(72) Erfinder: Schleuthner, Andreas, 10829 Berlin (DE)

(57) **Zusammenfassung**

Es wird ein Haushaltgerät (1) mit einer Anzeigeeinrichtung (2) vorgeschlagen, die derart von einer Recheneinheit (3) ansteuerbar ist, dass zumindest in einem vorbestimmten Betriebsmodus des Haushaltgeräts (1) wenigstens ein Bild und/oder zumindest eine Bildsequenz, wie zum Beispiel ein Bildschirmschoner, durch die Anzeigeeinrichtung (2) anzeigbar ist.

## Beschreibung

Die vorliegende Erfindung betrifft ein Haushaltgerät mit einer Anzeigeeinrichtung, welche mittels einer Recheneinheit ansteuerbar ist.

Aus dem Stand der Technik sind Haushaltgeräte hinreichend bekannt. Beispielsweise können derartige Haushaltgeräte eine Anzeigeeinrichtung aufweisen, die bestimmte Betriebsdaten während des Betriebsmodus des Haushaltgerätes anzeigt. Die Anzeigeeinrichtung kann ein Bildschirm, wie z. B. ein Flüssigkristall-Bildschirm, ein sogenannter LC-Display, sein. Es können jedoch auch andere Bildschirme verwendet werden. Die Anzeigeeinrichtung des bekannten Haushaltgerätes ist üblicherweise mit einer Recheneinheit gekoppelt, sodass die gewünschten Daten auf dem Bildschirm angezeigt werden können. Des Weiteren kann das Haushaltgerät auch über die Anzeigeeinrichtung, welche dann einen sogenannten Touch-Screen umfasst, bedient werden

Beispielsweise ist aus der Druckschrift EP 0 976 862 A1 ein Verfahren und eine Vorrichtung zum Einstellen eines Betriebsprogramms eines programmgesteuerten Haushaltgerätes bekannt. Bei dem programmgesteuerten Haushaltgerät werden das Betriebsprogramm und dessen Parameter mittels einer Bedienvorrichtung eingestellt. Dazu werden das gewählte Betriebsprogramm und dessen Parameter von einer Anzeigeeinrichtung angezeigt. Als Anzeigeeinrichtung wird ein LCD-Display als Bildschirm verwendet.

Bei dem bekannten Haushaltgerät wird eine Anzeige der Betriebsprogrammparameter durch eine mit der Anzeigeeinrichtung gekoppelten Recheneinheit realisiert, welche die entsprechenden Daten, wie z.B. die Betriebsdauer usw., aufbereitet und in entsprechende Signale umwandelt, so dass diese an das Display gesendet werden können, um die Daten auf dem Display anzeigen zu können.

Der vorliegenden Erfindung liegt die Aufgabe zugrunde, ein Haushaltgerät mit einer Anzeigeeinrichtung der eingangs genannten Gattung vorzuschlagen, welche das Anzeigepotential erweitert.

Diese Aufgabe wird erfindungsgemäß durch die Merkmale des Patentanspruches 1 gelöst. Weitere vorteilhafte Ausgestaltungen ergeben sich insbesondere aus den Unteransprüchen.

Demnach wird ein Haushaltgerät mit einer Anzeigeeinrichtung vorgeschlagen, welche mittels einer Recheneinheit ansteuerbar ist, wobei die Anzeigeeinrichtung derart von der Recheneinheit ansteuerbar ist, dass zumindest in einem vorbestimmten Betriebsmodus des Haushaltgeräts wenigstens ein Bild und/oder zumindest eine Bildsequenz durch die Anzeigeeinrichtung anzeigbar ist.

Auf diese Weise kann das Anzeigepotential des in der Regel als LC-Display ausgebildeten Bildschirmes in vorteilhafter Weise erweitert werden, da nicht nur Betriebsdaten angezeigt werden, sondern unabhängig von dem jeweiligen Betriebsmodus Bilder und/oder Bildsequenzen ausgegeben werden können. Somit kann der sonst langweilig anmutende Bildschirm der Anzeigeeinrichtung bei dem erfindungsgemäßen Haushaltgerät nicht nur ästhetisch sondern auch technisch aufgewertet werden. Beispielsweise kann im ausgeschalteten Zustand bzw. Betriebsmodus des Haushaltgerätes, bei dem üblicherweise keine Betriebsdaten angezeigt werden, der Bildschirm bzw. das Display z. B. bewegte Bilder anzeigen. Die Bilder können auch bestimmte Informationen attraktiv für den jeweiligen Betrachter aufbereiten.

Im Rahmen einer besonders vorteilhaften Ausgestaltung der vorliegenden Erfindung kann zum Anzeigen eines Bildes und/oder einer Bildsequenz ein von der Recheneinheit ansteuerbares Anzeigeschonprogramm ausgeführt werden. Diese üblicherweise als Bildschirmschoner bezeichneten Anzeigeschonprogramme können es ermöglichen, dass Bilder oder Bildsequenzen mit variierenden Mustern oder dergleichen auf dem Display angezeigt werden, sobald z. B. eine wählbare Zeitspanne nach der letzten Bedienung abgelaufen ist oder ein Standbybetrieb des Haushaltgerätes automatisch oder manuell eingestellt wird. Als Bilder können werkseitig eingestellte Herstellerlogos, aber auch andere z. B. individuell ausgewählte Bilder und Bildsequenzen verwendet werden. Zudem können die anzeigbaren Bilder oder Bildsequenzen derart gewählt werden, dass dabei ein besonders schonender Betrieb des Displays ermöglicht wird, sodass die Lebensdauer der Anzeigeeinrichtung des programmgesteuerten Haushaltgerätes in vorteilhafter Weise verlängert wird.

Um ein vorbestimmtes Displayschonprogramm ausführen zu können und die Bilder bzw. Bildsequenzen auf dem Bildschirm anzeigen zu können, kann zumindest ein vorbestimmter Bildschirmschoner in einem mit der Recheneinheit gekoppelten Speicher oder dergleichen abgespeichert werden. Die Recheneinheit kann bei Bedarf das Programm entsprechend starten, indem die erforderlichen Daten aus dem Speicher abgerufen werden. Beispielsweise können bestimmte Displayschonprogramme bei der Herstellung des Haushaltgerätes vorinstalliert werden.

Eine mögliche Ausführungsform der Erfindung kann vorsehen, dass die Recheneinheit zum Aktualisieren und/oder Erweitern eines vorhandenen oder auch eines neuen Displayschonprogramms mit dem Internet oder einem anderen Netzwerk verbindbar ist. Auf diese Weise kann ohne Weiteres beispielsweise auf Daten, welche auf einer herstellereigenen Internetseite oder jeder anderen beliebigen Internetseite gespeichert sind, zugegriffen werden, um neue oder auch aktualisierte Anzeigeschonprogramme bzw. Bildschirmschoner herunterladen zu können.

Vorzugsweise kann gemäß einer Weiterbildung der Erfindung das Anzeigeschonprogramm während des normalen Betriebsmodus aktiviert werden. Somit kann dem in der Regel im Wohnbereich des Benutzers aufgestellten Haushaltgerät durch eine individuell wählbare Displaygestaltung eine besondere Aufmerksamkeit zukommen, sodass sich diese erfindungsgemäßen Haushaltgeräte von anderen deutlich abheben. Außerdem kann durch das Beobachten des sich verändernden Bildschirmes verhindert werden, dass Kinder von unerwünschten Handlungen am Haushaltgerät abgelenkt werden, sodass sicherheitskritische Situationen vermieden können.

Eine weitere Ausführungsform der Erfindung kann vorsehen, dass das Displayschonprogramm auch im abgeschalteten Betriebsmodus aktivierbar ist. Demnach kann auch im ausgeschalteten Zustand des Haushaltgerätes das sonst leblos technisch langweilig wirkende Display besonders attraktiv gestaltet werden. Auf diese Weise wird die Anzeigeeinrichtung, insbesondere bei einem großen Display, quasi als sogenannter Eyecatcher gestaltet.

Besonders vorteilhaft kann die vorliegende Erfindung bei Wäschebehandlungsmaschinen, Kühlgeräten, Backöfen oder Kochmulden zum Einsatz kommen. Es ist jedoch auch denkbar, dass die Erfindung bei anderen nicht weiter aufgezählten Haushaltgeräten realisiert wird.

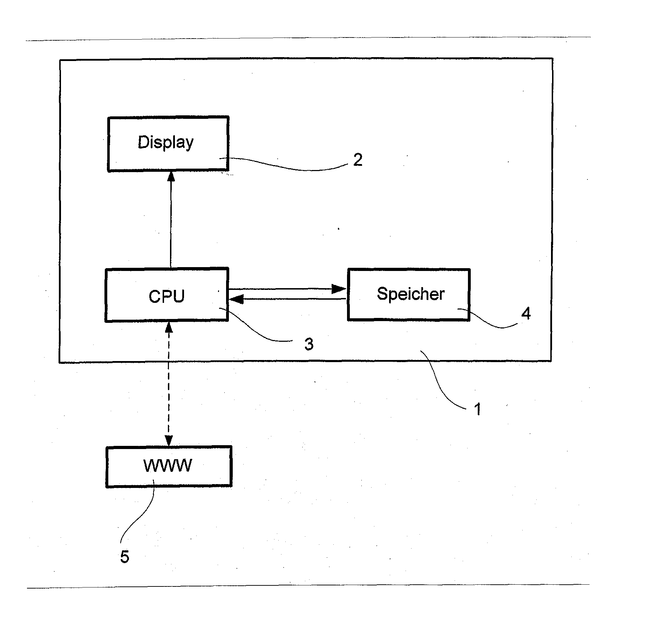

Nachfolgend wird die vorliegende Erfindung anhand der Zeichnung näher erläutert.

Die einzige Figur der Erfindung zeigt eine schematische, nicht maßstabsgetreue Prinzipdarstellung einer möglichen Ausführungsform eines Haushaltgerätes 1, welches z.B. als Wäschebehandlungsmaschine, Kühlgerät, Backofen oder Kochmulde ausgebildet sein kann.

Das erfindungsgemäße Haushaltgerät 1 weist eine Anzeigeeinrichtung 2 auf, welche bei dieser Ausführungsform einen LC-Display als Bildschirm umfasst. Die Anzeigeeinrichtung 2 wird über eine Recheneinheit 3, welche z.B. eine zentrale Prozesseinheit (CPU) oder dergleichen sein kann, angesteuert. Die Recheneinheit 3 steht im Datenaustausch mit einem Speicher 4. Der Speicher 4 kann ein Festplattenspeicher, aber auch ein anderer, z. B. elektronischer Speicher oder dergleichen sein, wie er auch bei Computern verwendet wird.

Die Recheneinheit 3 kann über eine entsprechende Datenverbindung, welche auch kabellos ausgebildet sein kann, mit einem Netzwerk verbunden sein. Vorzugsweise kann als Netzwerk das Internet 5 (WWW) verwendet werden, welches z.B. über eine sogenannte WLAN-Verbindung oder dergleichen mit der Recheneinheit kabellos gekoppelt ist.

Mit Hilfe der Internetverbindung kann eine Aktualisierung oder auch eine Erweiterung der in dem Speicher 4 gespeicherten Daten bzw. Programme ermöglicht werden. Somit kann z. B. ein neues Displayschonprogramm bzw. ein neuer Bildschirmschoner für das Display der Anzeigeeinrichtung 2 heruntergeladen werden. Durch die Recheneinheit 3 kann ein aktualisiertes oder neues Programm entsprechend ausgeführt werden.

### Bezugszeichenliste

- 1: Haushaltgerät
- 2: Anzeigeeinrichtung
- 3: Recheneinheit
- 4: Speicher
- 5: Internet /Netzwerk

## Patentansprüche

1. Haushaltgerät mit einer Anzeigeeinrichtung, welche mittels einer Recheneinheit ansteuerbar ist, **dadurch gekennzeichnet, dass** die Anzeigeeinrichtung (2) derart von der Recheneinheit (3) ansteuerbar ist, dass zumindest in einem vorbestimmten Betriebsmodus des Haushaltgeräts (1) wenigstens ein Bild und/oder zumindest eine Bildsequenz durch die Anzeigeeinrichtung (2) anzeigbar ist.

2. Haushaltgerät nach Anspruch 1, **dadurch gekennzeichnet, dass** zum Anzeigen eines Bildes und/oder einer Bildsequenz ein von der Recheneinheit (3) ansteuerbares Anzeigeschonprogramm ausführbar ist.

3. Haushaltgerät nach Anspruch 2, **dadurch gekennzeichnet, dass** zumindest ein vorbestimmtes Anzeigeschonprogramm in einem mit der Recheneinheit (3) gekoppelten Speicher (4) abgespeichert ist.

4. Haushaltgerät nach Anspruch 2 oder 3, **dadurch gekennzeichnet, dass** die Recheneinheit (3) zum Aktualisieren und/oder Erweitern von Anzeigeschonprogrammen mit dem Internet (5) verbindbar ist.

5. Haushaltgerät nach einem der Ansprüche 2 bis 4, **dadurch gekennzeichnet, dass** ein vorbestimmtes Anzeigeschonprogramm während des normalen Betriebsmodus des Haushaltgerätes (1) ausführbar ist.

6. Haushaltgerät nach einem der Ansprüche 2 bis 5, **dadurch gekennzeichnet, dass** das Anzeigeschonprogramm im abgeschalteten Betriebsmodus des Haushaltgerätes (1) ausführbar ist.

7. Haushaltgerät nach einem der vorangehenden Ansprüche, **dadurch gekennzeichnet, dass** es eine Wäschebehandlungsmaschine, ein Kühlgerät, ein Backofen oder eine Kochmulde ist.
